(19) **Europäisches Patentamt**

**European Patent Office**

**Office européen des brevets**

(11) **EP 1 371 958 B1**

(12) **FASCICULE DE BREVET EUROPEEN**

(45) Date de publication et mention
de la délivrance du brevet:
**22.02.2006 Bulletin 2006/08**

(51) Int Cl.:
***G01J 3/28*** *(2006.01)*          ***G06T 7/00*** *(2006.01)*

(21) Numéro de dépôt: **03291408.7**

(22) Date de dépôt: **12.06.2003**

(54) **Procédé et dispositif d'extraction de signature spectrale d'une cible ponctuelle**

Vorrichtung und Verfahren zum Extrahieren der spectralen Signatur eines punktförmigen Ziels

Method and apparatus for extracting the spectral signature of a point target

(84) Etats contractants désignés:
**DE ES FR GB IT**

(30) Priorité: **12.06.2002 FR 0207235**

(43) Date de publication de la demande:
**17.12.2003 Bulletin 2003/51**

(73) Titulaire: **EADS ASTRIUM SAS**
**31402 Toulouse Cedex 4 (FR)**

(72) Inventeurs:
• **Paléologue, Alexandre**
**78146 Velizy Villacoublay (FR)**

• **Boulogne, Laurent**
**78146 Velizy Villacoublay (FR)**

(74) Mandataire: **Loisel, Bertrand**
**Cabinet Plasseraud**
**65/67 rue de la Victoire**
**75440 Paris Cedex 09 (FR)**

(56) Documents cités:
**US-A- 3 849 645          US-A- 4 516 220**
**US-A- 5 479 258**

EP 1 371 958 B1

**Description**

La présente invention concerne l'extraction de signature spectrale d'une cible ponctuelle apparaissant comme une tache ayant une radiométrie différente de celle du fond dans au moins une image d'une scène fournie par un capteur dans une bande spectrale généralement unique. On qualifiera de "ponctuelle" une cible qui apparaît dans l'image fournie par un détecteur matriciel d'instrument d'observation comme une tache dont l'énergie radiométrique est en majeure partie concentrée sur une surface équivalente à celle d'un pixel et s'étend sur quelques pixels mutuellement adjacents du fait de la diffraction de l'instrument.

L'invention trouve une application particulièrement importante dans l'extraction, ou la restitution, de la signature d'une cible ponctuelle fixe ou mobile dans une image à une ou plus fréquemment à deux dimensions fournie par un capteur mono bande porté par un avion ou un satellite. La signature spectrale d'une cible peut être représentée par un vecteur d'état et, suivant le cas, on cherchera à obtenir l'ordre zéro du vecteur d'état, c'est-à-dire la radiométrie moyenne de la cible, l'ordre 1, c'est-à-dire la morphologie du spectre de la cible, pouvant être représentée par une pente, voire des ordres supérieurs.

L'extraction de signature et sa caractérisation présentent de nombreuses applications. Elle peut être combinée à une recherche de localisation de la cible, effectuée sur une image unique, et/ou à une restitution de trajectoire à partir d'images multiples successives fournies par un même capteur.

On connaît déjà divers procédés d'extraction de signature d'une cible ponctuelle fixe ou mobile à partir d'une ou de plusieurs images fournies par un capteur aéroporté.

En particulier, on connaît un procédé qui exige de disposer d'une image dans deux bandes spectrales distinctes. Il est alors possible de déduire la signature de la cible par des calculs, par exemple par calcul d'un rapport de radiométrie dans les deux bandes. Ce procédé peut être mis en oeuvre en utilisant, comme capteur, un ensemble de deux instruments mono-bandes, travaillant dans des bandes spectrales différentes. Mais la mise en oeuvre simultanée des deux instruments impose des conditions difficilement réalisables sur avion ou satellite. Les deux instruments doivent être alignés. Les instruments et leurs électroniques de détection doivent faire l'objet d'une calibration différentielle.

Une seconde solution consiste à utiliser un instrument assurant l'observation dans deux bandes, mais l'instrument est alors complexe et coûteux.

Un autre procédé déjà utilisé utilise la corrélation entre des imagettes pour rechercher le maximum de la fonction d'intercorrélation. On peut ainsi obtenir la relation d'étalement du point représentatif de la cible ou PSF (d'après la formulation anglo-saxonne Point Spread Function) en fonction de la longueur d'onde . Pour arriver à ce résultat, il faut tout d'abord réaliser une discrétisation en longueur d'onde $\lambda$ pour obtenir les imagettes successives. Ce procédé, dont les performances sont d'autant plus élevées que la discrétisation est fine, conduit à constituer des bases d'imagettes de volume très important. Il exige des calculs lourds et peu compatibles avec un fonctionnement en temps réel. De plus, l'évaluation de la pertinence des ordres restitués du vecteur d'état n'est obtenue qu'à l'issue des calculs. Il n'est pas possible de limiter a priori le nombre d'ordres du vecteur d'état que l'on souhaite restituer.

La présente invention vise à fournir un procédé répondant mieux que ceux antérieurement connus aux exigences de la pratique, notamment en permettant l'extraction de signature en temps réel avec une approximation directe immédiate et simultanée des différents ordres, et cela sur une image fournie par un capteur mono-bande dont la réalisation technique est simple.

Dans ce but, l'invention propose notamment un procédé d'extraction de signature spectrale tel qu'énoncé dans la revendication 1. Des modes d'exécution préférés en sont énoncés dans les revendications 2 à 9.

Dans le cas fréquent où l'image est fournie par un capteur monté sur un porteur mobile (tel qu'un avion ou un satellite) le capteur de formation de l'image sera généralement associé à des moyens externes fournissant des informations de datation, de position et d'attitude du capteur par rapport à la scène, notamment en vue de permettre de recaler des images successives les unes par rapport aux autres.

On peut citer, à titre d'exemple de mise en oeuvre de l'invention, l'extraction d'une signature de cible dans une image ou des images successives fournies par un capteur infrarouge mono-bande, travaillant dans une bande de transparence atmosphérique, par exemple entre 3 et 5 $\mu$m ou entre 8 et 12 $\mu$m. Toutefois, l'invention est également applicable dans d'autres bandes spectrales.

L'invention peut également être utilisée pour extraire la signature d'une cible en partant d'images fournies par un capteur multi-bandes, bien que son intérêt soit alors plus faible.

Un tel procédé permet notamment, grâce à l'orthogonalité de la base utilisée, de découpler les ordres successifs du vecteur d'état les uns par rapport aux autres. On obtient ainsi de façon directe immédiate et simultanée une approximation des ordres successifs de la décomposition du spectre. On peut éventuellement restituer de façon précise tous ces ordres de décomposition en mettant en oeuvre le couplage entre la position de la cible et sa radiométrie.

Dans un mode particulier de réalisation, le procédé suivant l'invention permet de restituer également la position d'une cible ponctuelle à partir d'une image, donc d'une observation, unique, en mettant en oeuvre une estimation du centre de la tache formée par la cible dans l'image avec une précision inférieure à la taille d'un pixel. Les ordres successifs du vecteur d'état peuvent alors être estimés directement et simultanément. Dans beaucoup de cas il suffira de rechercher des ordres bas, par exemple 0 et 1.

Dans le cas où l'on dispose de plusieurs images successives, c'est-à-dire d'observations multiples, le procédé permet au surplus de reconstituer la trajectoire de la cible ponctuelle.

La base de fonctions servant à la décomposition spectrale de la radiométrie de la cible peut être de natures diverses. Elle peut être constituée de fonctions orthogonales, telles que des fonctions trigonométriques, notamment sinus, ou de type dichotomique. Cette base peut également être constituée de certaines fonctions non orthogonales.

Le procédé suivant l'invention présente également une grande souplesse d'adaptation à différents cas particuliers. Dans le cas où on recherche une approximation directe, simultanée et rapide, en temps réel, une résolution directe par approximation suffira. Dans le cas où on recherche une restitution avec une précision élevée des différents ordres successifs de la décomposition du spectre, on mettra en oeuvre un processus de résolution itérative du problème inverse qui sera défini plus loin, cela en quelques itérations tenant compte du couplage entre la position et la radiométrie de la cible. Cette inversion peut être effectuée par une méthode classique des moindres carrés ou par une méthode de convergence sous contraintes évoluée, par exemple de type gradients réduits généralisés ou Powell.

Il est d'autre part possible de réaliser une analyse multi-modèles, c'est-à-dire utilisant plusieurs familles différentes de fonctions de la base de décomposition du spectre.

L'invention propose également comme défini dans la revendication 10, un dispositif permettant de mettre en oeuvre le procédé défini ci-dessus. Ce dispositif comportera généralement, en plus d'un capteur permettant d'obtenir des images sous forme d'une matrice à deux dimensions de pixels codés sous forme numérique, des moyens de calcul programmés de façon à mettre en oeuvre les étapes définies plus haut, associés à une mémoire stockant les bases de fonctions requises pour la décomposition.

Le document US-A-4 516 220 divulgue un procédé de détermination d'impulsions vidéo à partir de signatures spectrales.

Les caractéristiques ci-dessus ainsi que d'autres apparaîtront mieux à la lecture de la description qui suit de modes particuliers de réalisation, donnés à titre d'exemples non limitatifs. La description se réfère aux dessins qui l'accompagnent, dans lesquels :

- la figure 1 est un synoptique simplifié d'un mode de mise en oeuvre du procédé ;
- la figure 2 illustre les fonctions mises en oeuvre pour l'extraction de signature et éventuellement de position ou de trajectoire ;
- la figure 3 est un diagramme montrant un mode de décomposition spectrale utilisant une base de fonction dichotomique ;
- la figure 4 est un schéma détaillé montrant la séquence des opérations d'extraction avec plus de détail que la figure 2 ;

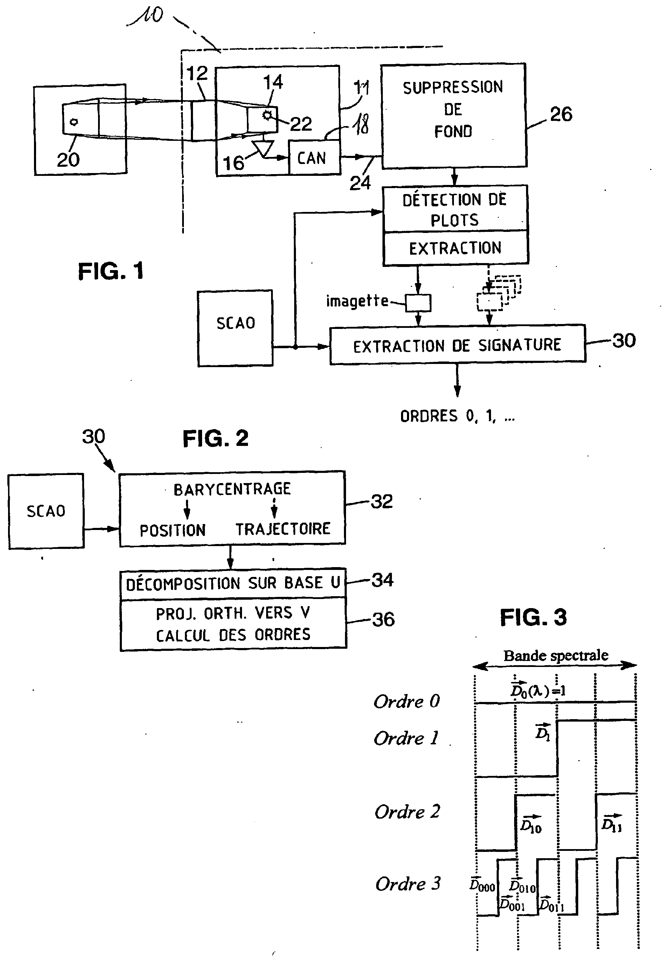

Un dispositif de mise en oeuvre de l'invention peut avoir la constitution de principe montrée en figure 1. Ses différents éléments seront successivement décrits.

**Capteur**

Le dispositif 10 comporte un capteur constitué par un instrument optronique 11 ayant une optique 12 et un détecteur de formation d'une image 14 de type matriciel, associé à un amplificateur 16 et un convertisseur analogique-numérique 18. Le détecteur fournira en général directement une image à deux dimensions. On peut cependant utiliser un détecteur à une seule dimension lorsque le dispositif est monté sur un porteur faisant défiler la scène observée (mode dit de balayage ou push-broom). Le détecteur fournit, lors de sa mise en oeuvre, des images successives.

Le capteur peut avoir une bande unique large ou étroite, continue ou fragmentée. La résolution du capteur sera pratiquement toujours proche de la limite de diffraction.

Lorsque le procédé n'est mis en oeuvre que pour effectuer une extraction de signature et éventuellement une localisation de ciblé, chaque séquence d'opérations peut n'être effectuée que sur une seule image d'une scène 20 fournie par le capteur et contenant la cible 22. En revanche, une identification de trajectoire nécessite d'effectuer des calculs sur plusieurs images successives de la même scène contenant la cible 22.

Le détecteur fournit ainsi, sur la sortie 24, des images successives qui sont utilisées par une chaîne de traitements destinée à :

- observer la cible,
- limiter la recherche à une imagette (ou des imagettes) de surface plus réduite que celle des images,
- éventuellement effectuer une suppression de fond,
- détecter la cible et caractériser sa signature.

Cette chaîne de traitements pourra être réalisée en programmant un processeur de traitement de signal de façon à exécuter les calculs exposés ci-après.

Les données brutes apparaissant sur la sortie 24 comportent, sauf lorsque l'on ne cherche pas à localiser la cible dans un repère absolu, en plus de la radiométrie de chaque pixel codé sur N bits, des informations de contexte permettant de dater chaque image et d'indiquer la position du porteur et son attitude dans le cas d'un capteur monté sur un tel porteur mobile. Ces dernières informations peuvent être explicites ou implicites. Dans ce dernier cas la prise en compte de la position et de l'attitude du porteur, fournies par exemple par un système SCAO du porteur interviennent à un stade postérieur.

**Chaîne image : suppression de fond**

Dans le mode de réalisation montré en figure 1, les images brutes sont traitées par une chaîne image de suppression de fond 26 pouvant également effectuer une correction radiométrique . Cette chaîne image pourra être omise lorsqu'il y a peu ou pas de fond structuré, c'est-à-dire dans un contexte favorable à l'observation. Elle sera prévue lorsqu'il existe un fond structuré.

La chaîne image 26 permettant de supprimer le fond peut être de type classique et notamment purement spatial, purement temporel ou spatio-temporel. Toutefois on utilisera avantageusement l'un des procédés décrits dans FR-A-2 832 527, à laquelle on pourra se reporter.

La partie correction radiométrique des images brutes permet de réduire les non-uniformités différentielles de réponse des détecteurs. Les lois de correction utilisées sont classiques de type linéaire, polynomiale ou encore logarithmique. Elles peuvent être implantées dans des calculateurs spécialisés ou d'usage général ou correspondre à une table de correction applicable à chaque pixel.

En sortie de cette correction, les pixels de l'image sont codés sur $N_b$ bits.

La correction peut être suivie d'un filtrage pour extraire les informations utiles de l'image. Ce filtrage peut être de type temporel, spatial ou spatio-temporel, comme indiqué ci-dessus.

Enfin des traitements liés aux problèmes de repliement et de stabilisation de visée, peuvent être ceux décrits dans FR-A-2 832 527.

**Chaîne de détection et d'extraction des imagettes**

Cette chaîne effectue deux opérations. Après suppression des fonds, le procédé effectue une détection des "plots" contenant la cible, par des techniques classiques de type seuillage, fixe ou évolutif. La taille des plots dépend essentiellement de l'étalement dû à la diffraction, lorsqu'on utilise un instrument qui n'est limité que par la diffraction. Souvent la taille retenue sera celle d'un carré de 3 à 7 pixels de côté. Elle correspond à des longueurs d'onde et un diamètre pupillaire que l'on utilise souvent pour des observations depuis l'espace.

Il est nécessaire de réduire la taille de l'image d'origine afin de n'appliquer les traitements d'extraction de signature que sur une partie utile de l'image, autour de la cible.

La taille de l'imagette sera d'un nombre $L = M_l \times N_c$ de pixels ($M_l$ lignes $\times$ $N_c$ colonnes) choisi pour contenir tous les pixels concernés par la cible, c'est-à-dire les plots détectés. Cette fonction est réalisée de façon numérique par des calculateurs spécialisés ou un calculateur général. Pour tenir compte de ce qu'une cible peut n'être pas centrée sur un pixel, on peut être amené à aller jusqu'à $M_l = N_c = 7$.

Lorsqu'on souhaite ultérieurement faire une trajectographie (cas de l'extraction 30 montrée en figure 2), la chaîne doit fournir une séquence d'imagettes et il est nécessaire de disposer d'informations de datation et d'attitude du porteur pour recaler les images successives les unes par rapport aux autres

**Trajectographie**

La recherche de barycentre 32 (ou "centroïding") appliquée à l'imagette ou à la séquence d'imagettes est un préalable nécessaire à l'initialisation de la reconnaissance.

En effet, l'introduction des coordonnées du centre de la tache dans la résolution du problème est nécessaire à l'extraction de la signature.

Si on ne dispose que d'une seule imagette, on n'obtiendra que la restitution de la position de la cible, avec une précision de calcul limitée par des biais et bruits.

Si on dispose d'une séquence d'imagettes, on pourra obtenir une restitution de la trajectoire de la cible, associée à un bilan d'erreur.

**Décomposition spectrale : projection de l'image sur une base de fonctions (U)**

La décomposition 34 de l'image de la cible se fait par projection sur une base de fonctions U déterminée par transformation d'une base $u = (\bar{u}_0(\lambda), \bar{u}_1(\lambda), ..., \bar{u}_K(\lambda))$ de décomposition du spectre à l'aide de la PSF instrumentale. Cette PSF est par exemple déterminée à l'avance par étalonnage.

Cette base de décomposition du spectre $u = (\bar{u}_0(\lambda), \bar{u}_1(\lambda), ..., \bar{u}_K(\lambda))$ peut être réalisée :

- avec des fonctions orthogonales $\bar{u}_p(\lambda)$ $(0 \le p \le K)$, telles que des fonctions de type sinus ou de type dichotomique,
- avec des fonctions non orthogonales $\bar{u}_p(\lambda)$, telles que des fonctions polynomiales par exemple.

La décomposition spectrale permet d'exprimer le spectre de la cible $\varepsilon(\lambda)$ sous la forme d'une somme de fonctions exprimées dans la base de décomposition:

$$\varepsilon(\lambda) = \varepsilon_0 \bar{u}_0(\lambda) + \varepsilon_1 \bar{u}_1(\lambda) + ... + \varepsilon_K \bar{u}_K(\lambda) \qquad (1)$$

Les coefficients $\varepsilon_0$, $\varepsilon_1$, ..., $\varepsilon_K$ de cette décomposition sont les ordres successifs du vecteur d'état, qu'on cherche à estimer d'après l'image observée pour en caractériser la signature spectrale. Le nombre K+1 de fonctions de base considérées est choisi selon l'ordre maximal recherché.

La décomposition pour des fonctions polynomiales et dichotomiques est donnée respectivement par les équations (2) et (3) ci-dessous, uniquement à titre d'illustration :

$$\varepsilon(\lambda) = \varepsilon_0 + \varepsilon_1 \lambda + \varepsilon_2 \lambda^2 + ... + \varepsilon_K \lambda^K \qquad (2)$$

$$\varepsilon(\lambda) = \varepsilon_0 \bar{D}_0(\lambda) + \varepsilon_1 \bar{D}_1(\lambda) + \varepsilon_{10} \bar{D}_{10}(\lambda) + \varepsilon_{11} \bar{D}_{11}(\lambda) + \varepsilon_{000} \bar{D}_{000}(\lambda) + \varepsilon_{001} \bar{D}_{001}(\lambda) + ...$$
$$(3)$$

où les fonctions $D_0(\lambda)$ à $D_3(\lambda)$ peuvent avoir la représentation graphique donnée à la figure 3.

L'équation (4) ci-après explicite la relation entre l'imagette Im(q), définie dans un repère pixel (i,j) avec $1 \le i \le M_l$, $1 \le j \le N_c$ et $q = (i-1) \times N_c + j \le L$, la fonction d'étalement de point ou PSF instrumentale et le spectre de la cible $\varepsilon(\lambda)$. La PSF est fonction de la position du pixel ligne et colonne (i,j) et de la longueur d'onde $\lambda$. Dans la relation (2), elle intervient avec un décalage spatial correspondant à la position sub-pixellique $(x_0, y_0)$ du centre de la tache.

$$\text{Im}((i-1) \times N_c + j) = \int_{x,y,\lambda} \text{PSF}\{[(x-x_0)-i][(y-y_0)-j]\lambda\}.\varepsilon(\lambda).dx.dy.d\lambda \qquad (4)$$

On peut alors exprimer l'imagette dans l'espace image sous la forme indiquée par l'équation (5). Il y a séparation des notions de spectre et de PSF. La relation (5) permet de mettre en évidence le besoin de la caractéristique PSF de l'instrument en fonction de la longueur d'onde.

$$\text{Im}((i-1) \times N_c + j) = \sum_p \varepsilon_p \int_{x,y,\lambda} \bar{u}_p(\lambda).\text{PSF}\{[(x-x_0)-i][(y-y_0)-j]\lambda\}.dx.dy.d\lambda \qquad (5)$$

La base $u = (\bar{u}_0(\lambda), \bar{u}_1(\lambda), ..., \bar{u}_K(\lambda))$, exprimée en fonction de la longueur d'onde $\lambda$, peut alors être

transposée dans l'espace image:

$$U_p((i-1) \times N_c + j) = \int_{x,y,\lambda} \bar{u}_p(\lambda).PSF\{[(x - x_0) - i][(y - y_0) - j]\lambda\}.dx.dy.d\lambda \quad (6)$$

pour $1 \leq i \leq M_l$ et $1 \leq j \leq N_c$.

Ceci permet de calculer la matrice $U = \left(\bar{U}_0, \bar{U}_1, ..., \bar{U}_K\right)$ dans l'espace image, de taille $L \times (K+1)$, dont les colonnes sont constituées par les vecteurs de base $\bar{U}_p = \left(U_p(1), U_p(2), ..., U_p(L)\right)^T$, dès lors qu'on connaît la PSF, qu'on a défini la base u et qu'on a estimé la position $(x_0, y_0)$ du barycentre.

Dans cette base, l'imagette exprimée sous forme d'un vecteur, soit $Im = [Im(1), Im(2), ..., Im(L)]^T$, se décompose de la façon suivante:

$$Im = \sum_p \varepsilon_p.\bar{U}_p \quad (7)$$

ou encore, en notation matricielle:

$$Im = U.\bar{\varepsilon} \quad (8)$$

$\bar{\varepsilon} = \left(\varepsilon_0, \varepsilon_1, ..., \varepsilon_K\right)^T$ désignant le vecteur d'état.

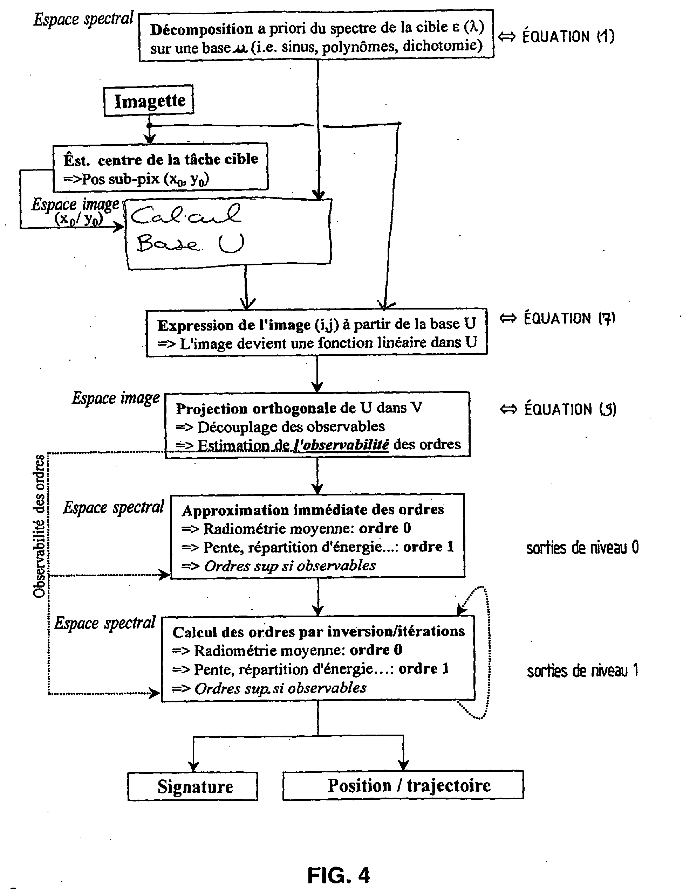

**Projection orthogonale (figures 2 et 4)**

La projection orthogonale 36 de la base U est un processus permettant de générer une base orthonormée $V = \left(\bar{V}_0, \bar{V}_1, ..., \bar{V}_K\right)$, constituée de vecteurs $\bar{V}_p$ $(0 \leq p \leq K)$ de dimension L.

Cette projection sur une autre base V sera utile lorsque la base U n'est pas elle-même orthogonale. En pratique, la référence à une base spectrale $u = \left(\bar{u}_0(\lambda), \bar{u}_1(\lambda), ..., \bar{u}_K(\lambda)\right)$ orthogonale (par exemple fonctions dichotomiques ou sinusoïdales) assure au moins approximativement une orthogonalité de la base U aux plus petits ordres. Si ce nombre d'ordres suffit à l'application faite des signatures spectrales extraites, on peut se dispenser de l'étape de projection orthogonale. Dans les autres cas, cette étape est exécutée de la manière décrite ci-dessous.

La génération de la base orthogonale V à partir de la base U repose par exemple sur la méthode de Gramm-Schmidt:

$$\bar{V}_0 = \bar{U}_0 \big/ \left\|\bar{U}_0\right\|_{im}$$

$$\bar{V}_1 = \left(\bar{U}_1 - (\bar{U}_1.\bar{V}_0).\bar{V}_0\right) \big/ \left\|\bar{U}_1 - (\bar{U}_1.\bar{V}_0).\bar{V}_0\right\|_{im}$$

$$\bar{V}_2 = \left(\bar{U}_2 - (\bar{U}_2.\bar{V}_0).\bar{V}_0 - (\bar{U}_2.\bar{V}_1).\bar{V}_1\right)\Big/\left\|\bar{U}_2 - (\bar{U}_2.\bar{V}_0).\bar{V}_0 - (\bar{U}_2.\bar{V}_1).\bar{V}_1\right\|_{im}$$

$$\vdots$$

$$\bar{V}_K = \left(\bar{U}_K - \sum_{p=0}^{K-1}(\bar{U}_K.\bar{V}_p).\bar{V}_p\right)\Big/\left\|\bar{U}_K - \sum_{p=0}^{K-1}(\bar{U}_K.\bar{V}_p).\bar{V}_p\right\|_{im}$$

qui s'exprime comme suit en notation matricielle:

$$V = U.\begin{pmatrix} P_{0,0} & P_{0,1} & \cdots & P_{0,K} \\ 0 & P_{1,1} & \ddots & \vdots \\ \vdots & \ddots & \ddots & P_{K-1,K} \\ 0 & \cdots & 0 & P_{K,K} \end{pmatrix} = U.P \qquad (9)$$

Le système (8) devient alors:

$$Im = V.\vec{\varepsilon}' \qquad\qquad (10)$$

avec $\vec{\varepsilon}' = P^{-1}\vec{\varepsilon}$, ou encore:

$$Im' = (V^T.V).\vec{\varepsilon}' \qquad\qquad (11)$$

Le système (11), où Im' = $V^T$.Im représente l'imagette exprimée dans la base orthogonale V et la matrice carrée $V^T$.V de taille (K+1)×(K+1) est symétrique, est facile à résoudre.
Le fait de travailler sur une base orthogonale V (quand U est déjà quasiment orthogonale, on peut prendre V = U, c'est-à-dire que P est la matrice identité de rang K+1) procure les avantages suivants.

1) On découple les ordres du vecteur d'état, c'est-à-dire qu'on rend les comportements des ordres indépendants les uns par rapport aux autres. On fait ainsi disparaître toute pollution d'un ordre sur ses voisins.

2) On obtient une approximation immédiate, par résolution directe, de tous les ordres du spectre simultanément, si on suppose que la position de la cible fournie par le barycentrage effectué sur l'imagette n'est pas remise en cause. En effet, il suffit d'inverser la matrice des vecteurs de la base V pour obtenir immédiatement une approximation de tous les ordres du spectre que l'on souhaite retenir (vecteur d'état). Cette inversion de V est effectuée de façon directe dans le cas le plus fréquent où le nombre de pixels de l'imagette est supérieur à K (les matrices U et V ont plus de colonnes que de lignes):

$$\vec{\varepsilon}' = \left(V^T.V\right)^{-1}.Im' = \left(V^T.V\right)^{-1}.V^T.Im \qquad (12)$$

ce qui donne accès à une estimation du vecteur $\vec{\varepsilon}$ par multiplication du résultat par la matrice triangulaire P:

$$\vec{\varepsilon} = P.\vec{\varepsilon}' = P.\left(V^T.V\right)^{-1}.V^T.Im \qquad (13)$$

La base V étant orthogonale, il est aisé de calculer l'inverse de la matrice symétrique définie positive $V^T.V$, par une méthode algébrique classique.

Si L < K+1, la matrice $V^T.V$ n'est plus inversible, et la méthode d'inversion directe est remplacée par une méthode d'optimisation connue en soi, par exemple la méthode des moindres carrés, une méthode itérative, etc., pour estimer $\vec{\varepsilon}$, après quoi on prend $\vec{\varepsilon} = P.\vec{\varepsilon}'$.

3) On constate que l'on ne se heurte pas à un des problèmes des solutions antérieurement connues, à savoir que l'on doit connaître un ordre postérieur pour vérifier qu'un ordre donné est correct. En effet on génère simultanément tous les ordres dont on souhaite disposer et, par analyse des covariances, comme indiqué ci-dessous, on détermine immédiatement à quel ordre il suffit de s'arrêter lorsque la covariance dépasse un seuil. Dans la pratique on ne dépassera généralement pas l'ordre 4.

4) On calcule de façon précise, en quelques itérations multi-axes (avec la covariance associée à chacun des ordres du vecteur d'état) tous les éléments pertinents du vecteur d'état.

La pertinence des ordres peut être vue:

- soit à travers la restitution de tous les ordres du vecteur d'état précédemment explicité;
- soit à travers une analyse de covariance effectuée sur la matrice de la base V.

On peut choisir parmi les méthodes itératives de résolution du problème inverse disponibles. On peut utiliser la méthode des moindres carrés classique dans le cas d'un modèle sans erreur. On peut utiliser une méthode de convergence plus évoluée (Powell, Gradient Réduit Généralisé) dans le cas où le modèle n'est pas parfaitement connu.

La figure 4 donne une représentation simplifiée des étapes ci-dessus. Après extraction d'imagette (ou d'une séquence si on veut effectuer une identification de trajectoire), la position $x_0$, $y_0$ du barycentre de la cible est estimée avec une définition sub-pixel, ce qui permet de calculer les vecteurs de base $\bar{U}_p$ selon (7) à partir du modèle de décomposition retenu pour le spectre $\varepsilon(\lambda)$ (base u par exemple selon (2) ou (3)). Une décomposition de l'image Im est alors effectuée dans la base $U = \left(\bar{U}_0, \bar{U}_1, ..., \bar{U}_K\right)$ selon (7). Les opérations ultérieures correspondent aux équations (9) et (12) ci-dessus. L'opération peut être arrêtée à l'approximation immédiate de l'ensemble des ordres retenus. Elle peut être poursuivie jusqu'à l'obtention de la signature et éventuellement de la position ou de la trajectoire en effectuant un calcul complet des ordres retenus (généralement au moins 0 et 1) par inversion de matrice et itérations arrêtées au moyen d'un test sur un critère de fin d'évolution.

## Revendications

1.  Procédé d'extraction de signature spectrale d'une cible ponctuelle (22) apparaissant comme une tache de radiométrie différente de celle du fond dans au moins une image (14), formée d'une matrice de pixels, d'une scène (20) obtenue dans une bande spectrale unique, comprenant les étapes suivantes :

- détecter et extraire de l'image (14) une imagette contenant la cible;
- localiser le centre de la tache correspondant à la cible détectée dans l'imagette;
- déterminer une base sensiblement orthogonale (U) ou (V) de vecteurs du domaine spatial de l'imagette à partir d'une base de décomposition spectrale et d'une fonction instrumentale d'étalement de point (PSF) calée en position sur le centre localisé de la tache; et
- exprimer l'imagette sur ladite base sensiblement orthogonale et en déduire une estimation des ordres successifs d'un vecteur d'état (Im) de la signature correspondant à une décomposition du spectre de la cible sur ladite base de décomposition spectrale.

2. Procédé selon la revendication 1, dans lequel la détection de l'imagette est opérée par seuillage radiométrique.

3. Procédé selon la revendication 1 ou 2, comprenant une étape préalable de suppression de fond dans l'image.

4. Procédé selon l'une quelconque des revendications précédentes, dans lequel l'étape de détermination de la base sensiblement orthogonale de vecteurs du domaine spatial de l'imagette comprend:

- le calcul d'une première base de vecteurs d'après la base de décomposition spectrale et la fonction d'étalement de point calée en position sur le centre localisé de la tache; et
- si ladite première base n'est pas sensiblement orthogonale, la détermination d'une seconde base orthogonale par projection orthogonale de la première base dans le domaine spatial.

5. Procédé selon la revendication 4, dans lequel le calcul d'un vecteur $\bar{U}_p$ de rang p $\geq 0$ de la première base de vecteurs est opéré selon:

$$U_p((i-1) \times N_c + j) = \int_{x,y,\lambda} \bar{u}_p(\lambda).PSF\{[(x - x_0) - i] [(y - y_0) - j] \lambda\}.dx.dy.d\lambda$$

où $U_p((i - 1) \times N_c + j)$ désigne la coordonnée du vecteur de base $\bar{U}_p$ associée à un pixel (i,j) de l'imagette, $\bar{u}_p(\lambda)$ désigne le vecteur de rang p de la base de décomposition spectrale, $(x_0, y_0)$ désigne la position estimée du centre de la tache dans l'imagette, $PSF\{[(x-x_0)-i] [(y-y_0)-j]\lambda\}$ désigne la fonction d'étalement de point calée en position sur le centre de la tache en fonction de la position (x, y) dans l'imagette et de la longueur d'onde $\lambda$.

6. Procédé selon l'une quelconque des revendications précédentes, dans lequel on restitue la position de la cible à partir d'une image unique, en mettant en oeuvre une estimation du centre de la tache formée par la cible dans l'image avec une précision inférieure à la taille d'un pixel.

7. Procédé selon l'une quelconque des revendications précédentes, dans lequel, l'image étant fournie par un capteur monté sur un porteur mobile, on fournit au capteur de formation de l'image des informations de datation, de position et d'attitude du porteur.

8. Procédé selon l'une quelconque des revendications précédentes, dans lequel, pour obtenir une restitution avec une précision élevée des différents ordres successifs de la décomposition du spectre, on met en oeuvre un processus de résolution itérative de problème inverse par itérations tenant compte du couplage entre la position et la radiométrie de la cible.

9. Procédé selon la revendication 8, dans lequel on effectue l'inversion par la méthode des moindres carrés ou par une méthode de convergence sous contraintes évoluée, par exemple de type gradients réduits généralisés ou Powell.

10. Dispositif d'extraction de signature spectrale d'une cible ponctuelle (22), comprenant des moyens d'obtention (11), (12), (16) et (18) d'une image (14) incluant la cible (22) et des moyens de traitement (26) et (30) de cette image configurés pour extraire la signature spectrale de la cible conformément à un procédé selon l'une quelconque des revendications précédentes.

**Patentansprüche**

1. Verfahren zum Extrahieren der spektralen Signatur eines punktförmigen Ziels (22), die wie ein radiometrischer Fleck erscheint, der sich von demjenigen des Grunds in zumindest einem Bild (14) unterscheidet, das gebildet ist aus einer Pixelmatrix, von einer Szene (20), die in einem einzigen spektralen Band erhalten wird, das die folgenden Schritte umfasst:

   - aus dem Bild (14) ein Kleinbild mit dem Ziel erkennen und extrahieren;
   - das Zentrum des Flecks lokalisieren, das dem im Kleinbild erkannten Ziel entspricht;
   - eine fast orthogonale Basis (U) oder (V) von Vektoren des Raumbereichs vom Kleinbild anhand einer Basis spektraler Zerlegung und einer instrumentalen Funktion der Punktspreizung (PSF) bestimmen, die hinsichtlich des vom Fleck lokalisierten Zentrums festgesetzt ist; und
   - das Kleinbild auf der fast orthogonalen Basis ausdrücken und daraus eine Schätzung der sukzessiven Folgen eines Zustandvektors (Im) der Signatur ableiten, die einer Zerlegung des Spektrums des Ziels auf der Basis der spektralen Zerlegung entspricht.

2. Verfahren nach Anspruch 1, in dem die Erkennung des Kleinbilds durch radiometrischen Schwellenwertvergleich ausgeführt wird.

3. Verfahren nach Anspruch 1 oder 2, das einen vorherigen Schritt der Grundlöschung im Bild umfasst.

4. Verfahren nach einem der vorhergehenden Ansprüche, in dem der Schritt der Bestimmung der fast orthogonalen Basis von Vektoren des Raumbereichs des Kleinbilds Folgendes umfasst:

   - die Berechnung einer ersten Basis von Vektoren nach der Basis der spektralen Zerlegung und der Funktion der Punktspreizung, die hinsichtlich des lokalisierten Zentrums des Flecks festgesetzt ist; und
   - wenn die erste Basis nicht fast orthogonal ist, die Bestimmung einer zweiten orthogonalen Basis durch orthogonale Projektion der ersten Basis im Raumbereich.

5. Verfahren nach Anspruch 4, in dem die Berechnung eines Vektors $\overline{U}_p$ des Rangs p $\geq$ 0 der ersten Vektorbasis gemäß:

$$U_p((i-1)xN_c + j) = \int_{x,y,\lambda} \overline{u}_p(\lambda) PSF\{[(x-x_0)-i],[(y-y_0)-j],\lambda\}.dx.dy.d\lambda$$

ausgeführt wird, wobei $U((i\text{-}1)xN_c + j)$ die Koordinate des Vektors der Basis $\overline{U}_p$ , die einem Pixel (i,j) des Kleinbilds zugeordnet ist, bezeichnet, wobei $\overline{U}_p(\lambda)$ den Vektor des Rangs p der Basis der spektralen Zerlegung bezeichnet, wobei $(x_0, y_0)$ die geschätzte Position des Zentrums des Flecks im Kleinbild bezeichnet, wobei $PSF\{[(x - x_0)\text{-}i],[(y - y_0)\text{-}j],\lambda\}$ die Funktion der Punktspreizung bezeichnet, die hinsichtlich des Zentrums vom Fleck in Abhängigkeit von der Position (x, y) im Kleinbild und von der Wellenlänge $\lambda$ festgesetzt ist.

6. Verfahren nach einem der vorhergehenden Ansprüche, in dem man die Position des Ziels anhand eines einzigen Bildes wiedergibt, indem eine Schätzung des Zentrums vom Fleck ausgeführt wird, der durch das Ziel im Bild gebildet wird, mit einer Präzision, die unter der Größe eines Pixels liegt.

7. Verfahren nach einem der vorhergehenden Ansprüche, in dem man, da das Bild durch einen Sensor geliefert wird, der auf einem mobilen Träger montiert ist, dem Sensor der Bildung des Bildes Informationen der Datierung, der Position und des Verhaltens vom Träger liefert.

8. Verfahren nach einem der vorhergehenden Ansprüche, in dem man, um eine Wiedergabe mit einer hohen Präzision der verschiedenen sukzessiven Folgen der Zerlegung des Spektrums zu erhalten, einen Prozess der iterativen Auflösung von inversen Problem durch Iterationen einsetzt, wobei die Kopplung zwischen der Position und der Radiometrie des Ziels berücksichtigt wird.

9. Verfahren nach Anspruch 8, in dem man die Inversion durch die Methode der kleinsten Quadrate oder durch eine entwickelte Konvergenzmethode unter Zwängen ausführt, zum Beispiel des Typs Verallgemeinerte reduzierte Gradienten oder Powell.

10. Vorrichtung zum Extrahieren der spektralen Signatur eines punktförmigen Ziels (22), die Mittel (11), (12), (16) und (18) zum Erhalten eines Bildes (14) mit dem Ziel (22) und Mittel (26) und (30) zur Bearbeitung dieses Bildes umfasst, die konfiguriert sind, um die spektrale Signatur des Ziels gemäß eines Verfahrens nach einem der vorhergehenden Ansprüche zu extrahieren.

**Claims**

1. Method for extracting the spectral signature of a point target (22) appearing as a spot with different radiometry from that of the background in at least one image (14), formed by a pixel matrix, of a scene (20) obtained in a unique spectral band, comprising the following steps:

  - detect and extract from the image (14) an imagette containing the target;
  - locate the centre of the spot corresponding to the target detected in the imagette;
  - determine an essentially orthogonal basis (U) or (V) of vectors of the spatial area of the imagette using a spectral decomposition basis and an instrumental point spread function (PSF) set in position on the located centre of the spot; and
  - express the imagette on said essentially orthogonal basis and deduce therefrom an estimation of the successive orders of a state vector (Im) of the signature corresponding to a decomposition of the spectrum of the target on said spectral decomposition basis.

2. Method according to claim 1, in which the detection of the imagette is carried out through radiometric thresholding.

3. Method according to claim 1 or 2, comprising a preliminary step of suppressing the background in the image.

4. Method according to any one of the preceding claims, in which the step of determining the essentially orthogonal basis of vectors of the spatial area of the imagette comprises:

  - the calculation of a first basis of vectors according to the spectral decomposition basis and the point spread function set in position on the located centre of the spot; and
  - if said first basis is not essentially orthogonal, the determination of a second orthogonal basis through orthogonal projection of the first basis in the spatial area.

5. Method according to claim 4, in which the calculation of a vector $\vec{U}_P$ of the range $p \geq 0$ of the first basis of vectors is carried out according to:

$$U_P((i-1) \times N_C + j) = \int_{x,y,\lambda} \vec{u}_P(\lambda).PSF\{[(x-x_0)-i],[(y-y_0)-j],\lambda\}.dx.dy.d\lambda$$

where $U_p((i-1) \times N_c + j)$ designates the coordinate of the base vector $\vec{U}_P$ associated with one pixel $(i,j)$ of the imagette, $\vec{u}_P(\lambda)$ designates the vector of the range p of the spectral decomposition basis, $(x_0, y_0)$ designates the estimated position of the centre of the spot in the imagette, $PSF\{[(x-x_0)-i],[(y-y_0)-j],\lambda\}$ designates the point spread function set in position in the centre of the spot according to the position (x, y) in the imagette and the wavelength $\lambda$.

6. Method according to any one of the preceding claims, in which the position of the target is restored using a unique image by implementing an estimation of the centre of the spot formed by the target in the image with a precision of less than the size of a pixel.

7. Method according to any one of the preceding claims, in which, with the image being supplied by a sensor mounted on a mobile carrier, information relating to dating, position and attitude of the carrier is supplied to the image formation sensor.

8. Method according to any one of the preceding claims, in which in order to obtain restoration with high precision of the successive different orders of the decomposition of the spectrum a process of inverse problem iterative resolution by iterations is implemented, taking into account the coupling between the position and the radiometry of the target.

9. Method according to claim 8, in which the inversion is carried out through the method of least squares or through a developed convergence method with restrictions, for example by way of generalised reduced gradients or Powell.

10. Method of extracting the spectral signature of a point target (22), comprising means of obtaining (11), (12), (16) and (18) an image (14) including the target (22) and means of processing (26) and (30) this image which are configured to extract the spectral signature of the target in accordance with a method according to any of the preceding claims.

**FIG. 1**

20

12

14

11

22

18

16

CAN

24

SUPPRESSION DE FOND

26

DÉTECTION DE PLOTS

EXTRACTION

imagette

SCAO

EXTRACTION DE SIGNATURE

30

ORDRES 0, 1, ...

**FIG. 2**

30

SCAO

BARYCENTRAGE

POSITION    TRAJECTOIRE

32

DÉCOMPOSITION SUR BASE U

34

PROJ. ORTH. VERS V
CALCUL DES ORDRES

36

**FIG. 3**

Bande spectrale

Ordre 0    $\vec{D_0}(\lambda)=1$

Ordre 1    $\vec{D_1}$

Ordre 2    $\vec{D_{10}}$    $\vec{D_{11}}$

Ordre 3    $\vec{D_{000}}$    $\vec{D_{010}}$

$\vec{D_{001}}$    $\vec{D_{011}}$

EP 1 371 958 B1

Espace spectral | Décomposition a priori du spectre de la cible ε (λ) sur une base μ (i.e. sinus, polynômes, dichotomie) | ⇔ ÉQUATION (1)

**Imagette**

Êst. centre de la tâche cible
=>Pos sub-pix (x₀, y₀)

Espace image (x₀/ y₀) → Calcul Base U

Expression de l'image (i,j) à partir de la base U
=> L'image devient une fonction linéaire dans U    ⇔ ÉQUATION (7)

Espace image | Projection orthogonale de U dans V
=> Découplage des observables
=> Estimation de *l'observabilité* des ordres    ⇔ ÉQUATION (5)

Observabilité des ordres

Espace spectral | Approximation immédiate des ordres
=> Radiométrie moyenne: **ordre 0**
=> Pente, répartition d'énergie...: **ordre 1**
=> *Ordres sup si observables*    sorties de niveau 0

Espace spectral | Calcul des ordres par inversion/itérations
=> Radiométrie moyenne: **ordre 0**
=> Pente, répartition d'énergie...: **ordre 1**
=> *Ordres sup. si observables*    sorties de niveau 1

**Signature**    **Position / trajectoire**

**FIG. 4**

14